(19) Europäisches Patentamt
European Patent Office
Office européen des brevets

(11) **EP 2 803 256 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(21) Anmeldenummer: **14165608.2**

(22) Anmeldetag: **23.04.2014**

(51) Int Cl.:
***A01D 41/127*** (2006.01)

(54) **Erntemaschine mit vorausschauender Vortriebsgeschwindigkeitsregelung**

Harvesting machine with a predictive propulsion speed control

Moissonneuse dotée d'un réglage de la vitesse de propulsion anticipé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2013 DE 102013209197**

(43) Veröffentlichungstag der Anmeldung:
**19.11.2014 Patentblatt 2014/47**

(73) Patentinhaber: **Deere & Company**
**Moline, IL 61265 (US)**

(72) Erfinder:
• **Münch, Dr. Philipp**
**67663 Kaiserslautern (DE)**
• **Jung, Benedikt**
**67655 Kaiserslautern (DE)**

(74) Vertreter: **Holst, Sönke**
**John Deere GmbH & Co. KG**
**Mannheim Regional Center**
**Global Intellectual Property Services**
**John-Deere-Strasse 70**
**68163 Mannheim (DE)**

(56) Entgegenhaltungen:
EP-A1- 1 243 173      EP-A1- 2 060 165
CA-A1- 2 530 090      DE-A1-102011 085 380

**Beschreibung**

Die Erfindung betrifft eine Erntemaschine, deren Vortriebsgeschwindigkeit anhand einer Anordnung zur vorausschauenden, berührungslosen Erfassung eines vor der Erntemaschine stehenden Erntegutbestands vorausschauend im Sinne einer Einhaltung eines vorbestimmten Massendurchsatzes geregelt wird.

Stand der Technik

Bei Erntemaschinen ist zwecks einer selbsttätigen Einstellung von Gutförder- und/oder Gutbearbeitungseinrichtungen eine Messung des Gutdurchsatzes sinnvoll. Der Gutdurchsatz wird häufig auch zu Zwecken der teilflächenspezifischen Bewirtschaftung gemessen. Weiterhin kann anhand des gemessenen Gutdurchsatzes die Vortriebsgeschwindigkeit der Erntemaschine auf einem Feld durch eine entsprechende Steuerung derart eingestellt werden, dass ein gewünschter Gutdurchsatz erreicht wird, der insbesondere einer optimalen Auslastung der Erntemaschine entspricht. Es ist bekannt, den Gutdurchsatz durch entsprechende Sensoren in der Erntemaschine zu ermitteln (vgl. beispielsweise EP 1 243 173 A1). Da die Messung erst erfolgt, nachdem das Gut von der Erntemaschine aufgenommen wurde, kann eine sprunghafte Änderung des Gutdurchsatzes bei derartigen Sensoren nicht mehr rechtzeitig durch eine entsprechende Anpassung der Fahrgeschwindigkeit ausgeglichen werden, was eine Unter- oder Überlastung von Gutbearbeitungseinrichtungen oder sogar Verstopfungen zur Folge haben kann.

In der DE 10 2011 017 621 A1 wird vorgeschlagen, die Höhe der Oberkante des Pflanzenbestandes auf einem Feld mittels eines Laser-Entfernungsmessers zu erfassen, dessen Signal auch eine Information über die Dichte des Pflanzenbestandes liefert, denn bei lückenhaften Beständen auf den Boden durchdringende Strahlen führen zu größeren Variationen in den Laufzeiten und somit den evaluierten Entfernungen als dichte Bestände, die homogenere Entfernungswerte liefern. Weiterhin wird ein Radarentfernungsmesser verwendet, dessen Strahlen den Pflanzenbestand durchdringen und eine Erstellung eines Bodenprofils ermöglichen, welches in Verbindung mit den Messwerten des Laser-Entfernungsmessers zur Bestimmung der Pflanzenhöhe dient. Zusätzlich werden die Intensitäten und Laufzeiten von an Pflanzen reflektierten Radarwellen erfasst, um die geometrische Bestandsdichte (d.h. das Volumen der Pflanzen je Volumen- oder Flächeneinheit des Feldes), die Feuchtigkeit der Pflanzen und die Massendichte der Pflanzen zu evaluieren. Diese Größen werden verwendet, um die Vortriebsgeschwindigkeit der Erntemaschine derart vorausschauend einzustellen, dass sie mit einem gewünschten Massendurchsatz arbeitet. Ein Vergleich mit an Bord der Erntemaschine erfassten Sensorwerten für den Durchsatz o. dgl. ist nicht vorgesehen. Hier beruht die vorausschauende Durchsatzermittlung ausschließlich auf den Messwerten der beiden Entfernungsmesser. Falls diese nicht hinreichend genau für den jeweils zu erntenden Pflanzenbestand kalibriert sind, sind auch die berechneten Durchsätze ungenau und das Arbeitsergebnis ist nicht befriedigend.

Die DE 101 30 665 A1 beschreibt einen Mähdrescher mit einem Laser-Entfernungsmesser, der um die Hochachse hin und her schwingt und den Erntegutbestand vor dem Mähdrescher sukzessive in seitlicher Richtung abtastet. Die Laufzeiten der reflektierten Wellen werden durch einen Empfänger erfasst, der anhand der Laufzeiten und der geometrischen Anordnung des Entfernungsmessers die vertikale Fläche des Erntegutbestandes ermittelt. Zusätzlich wird anhand der Intensität der reflektierten Wellen die Volumendichte (Raumfüllungsgrad) des Ernteguts abgeschätzt. Eine Multiplikation der Volumendichte mit der vertikalen Fläche und der Geschwindigkeit ergibt eine in Volumeneinheiten je Zeit gemessene, zu erwartende Durchsatzrate. Ein weiterer, vorausschauend auf den Bestand blickender Feuchtigkeitssensor ermittelt die Feuchtigkeit des Ernteguts, um die Massendichte und schließlich anhand der Durchsatzrate den zu erwartenden Massendurchsatz zu bestimmen. Dieser Massendurchsatz dient zur selbsttätigen, vorausschauenden Ermittlung der Vortriebsgeschwindigkeit. Die Durchsatzrate kann anhand eines an Bord des Mähdreschers sensorisch bestimmten Messwerts eines Gutdurchsatzsensors kalibriert werden, der beispielsweise das Antriebsmoment einer Dreschtrommel erfasst.

Die DE 10 2011 085 380 A1 beschreibt eine weitere Erntemaschine mit vorausschauend auf den Pflanzenbestand blickenden, mit elektromagnetischen Wellen arbeitenden Sensoren, aus deren Signalen statistische Parameter abgeleitet werden, welche mit von der Erntemaschine aufgenommenem Erntegut zusammenwirkenden Sensoren aufgenommenen Signalen verglichen werden, um Zusammenhänge zwischen den statistischen Parametern und den Ernteguteigenschaften selbsttätig zu bestimmen und anschließend die Signale der vorausschauenden Sensoren unter Berücksichtigung des evaluierten Zusammenhangs zur selbsttätigen Kontrolle der Erntemaschine zu verwenden. Bei den Erntegutparametern handelt es sich u.a. um die Bestandsdichte und die Feuchtigkeit. Die vorausschauenden Sensoren können z. B. die Intensitäten und Polarisationen der reflektierten Wellen erfassen.

Die Anordnungen nach DE 101 30 665 A1 und DE 10 2011 085 380 A1 berücksichtigen auch an Bord der Erntemaschine gewonnene Sensorwerte, um die aus den Signalen der berührungslos arbeitenden Sensoren gewonnenen Größen anschließend anhand gelernter Zusammenhänge genauer auszuwerten. Bei der DE 101 30 665 A1 wird eine Korrekturtabelle erzeugt, welche die durch den elektromagnetischen Sensor ermittelten Gutdurchsätze anhand der an Bord gemessenen Durchsätze korrigiert. Die DE 10 2011 085 380 A1 ermittelt Zusammenhänge zwischen statistischen Parametern des Ernteguts und den erfassten Durchsätzen. Bei beiden Druckschriften werden die an Bord der Erntemaschine gewonnenen Sensorwerte somit indirekt verwendet, um mit ihnen zunächst die Werte der berührungslosen Sensoren in einen genaueren Gutdurchsatz umzurechnen, der dann wieder als einzige Regeleingangsgröße für die Geschwindigkeitssteuerung dient. Die Funktion der Geschwindigkeitsregelung beruht auf absoluten Messwerten der berührungslosen Sensoren, deren Genauigkeit jedoch in der Praxis nicht immer hinreicht, um befriedigende Ergebnisse zu erzielen. Außerdem sind die Verfahren unter stationären Bedingungen nicht immer genau und weisen aufgrund der benötigten Evaluationszeiten der statistischen Parameter lange Reaktionszeiten auf.

Aufgabe

Die der Erfindung zu Grunde liegende Aufgabe wird darin gesehen, eine Erntemaschine bereitzustellen, bei welcher die oben erwähnten Nachteile nicht oder in vermindertem Maße vorliegen.

Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Erntemaschine umfasst Vortriebsmittel zum Bewegen der Erntemaschine mit einer Geschwindigkeit v über ein Feld. Eine geeignete Anordnung dient zur kontinuierlichen, vorausschauenden, berührungslosen Erfassung eines vor der Erntemaschine stehenden Erntegutbestands und zur Bereitstellung von Daten hinsichtlich eines zu erwartenden Massendurchsatzes in der Erntemaschine. Eine Steuerung ist konfiguriert, die Vortriebsgeschwindigkeit der Erntemaschine selbsttätig unter Berücksichtigung des unter Verwendung der Daten der besagten Anordnung berechneten, zu erwartenden Massendurchsatzes im Sinne einer Einhaltung eines gewünschten Wertes des Massendurchsatzes zu kontrollieren. Ein Sensor dient zur Erfassung einer vom tatsächlichen Massendurchsatz der Erntemaschine abhängigen Größe. Die Steuerung ist konfiguriert, den Ausgangswert des Sensors mit einem vom zu erwartenden Massendurchsatz abhängigen Wert zu vergleichen und das Ergebnis des Vergleichs kontinuierlich als Rückkopplungswert für die Kontrolle bzw. Regelung der Vortriebsgeschwindigkeit zu verwenden.

Somit werden Daten für den Massendurchsatz zwar durch die erwähnte Anordnung zur vorausschauenden, berührungslosen Erfassung eines vor der Erntemaschine stehenden Erntegutbestands vorausschauend ermittelt, es wird jedoch zusätzlich eine vom Massendurchsatz repräsentative Größe an Bord der Erntemaschine sensiert und mit einem Wert verglichen, bei dem es sich um einen seitens der Steuerung erwarteten, vom Massendurchsatz abhängigen Wert handelt. Eventuelle Abweichungen zwischen dem Messwert des Sensors und dem erwarteten Wert werden als Rückkopplungswert für die Vortriebsgeschwindigkeitseinstellung verwendet. Auf diese Weise erreicht man eine direktere und schnellere Berücksichtigung des an Bord der Erntemaschine gewonnenen Messwerts des Sensors als im Stand der Technik. Diese Vorgehensweise eignet sich besonders für Anordnungen, die zwar Änderungen im Erntegutdurchsatz gut erkennen können, nicht aber die absoluten Werte des Erntegutdurchsatzes. Letztere werden gemäß der vorliegenden Erfindung durch den Sensor zur Erfassung der vom Massendurchsatz der Erntemaschine abhängigen Größe und dessen Vergleich mit dem zu erwartenden Wert sowie die Rückkopplung des Ergebnisses des Vergleichs an die Geschwindigkeitsbestimmung berücksichtigt.

Die Anordnung zur vorausschauenden, berührungslosen Erfassung des vor der Erntemaschine stehenden Erntegutbestands und zur Bereitstellung von Daten hinsichtlich eines zu erwartenden Massendurchsatzes in der Erntemaschine ist vorzugsweise ein Entfernungsmesser mit einem Sender zum sukzessiven Beaufschlagen eines vor der Erntemaschine stehenden Erntegutbestands mit elektromagnetischen Wellen, einem Empfänger zum Empfangen von vom Erntegutbestand reflektierter Wellen und einer Auswertungseinheit, welche die Laufzeiten und/oder Amplituden der empfangenen Wellen verwendet, um Daten zu berechnen, anhand derer ein zu erwartender Massendurchsatz in der Erntemaschine evaluierbar ist. Es sind auch andere Ausführungsformen der erwähnten Anordnung denkbar, wie insbesondere Kameras mit Bildverarbeitungssystemen.

Der Entfernungsmesser ist insbesondere ein Radarsensor, bei dem die elektromagnetischen Wellen vom Sender abgestrahlte, horizontal und/oder vertikal polarisierte Radarwellen sind und der Empfänger vom Pflanzenbestand reflektierte, vertikal polarisierte Radarwellen und/oder horizontal polarisierte Radarwellen empfängt. Hierbei können Radarwellen einer einzigen Frequenz oder unterschiedlicher Frequenzen Verwendung finden. Anhand der empfangenen Radarwellen evaluiert die Auswertungseinheit insbesondere die zeitliche Ableitung des Raumfüllungsgrads des Pflanzenbestands mit Trockenmasse und Wasser sowie das aufgenommene Volumen. Es können alternativ oder zusätzlich beliebige andere Entfernungsmesser verwendet werden, z.B. im sichtbaren oder Infrarotbereich arbeitende Laser-Entfernungsmesser und dgl.

Bei einer bevorzugten Ausführungsform erfasst der Sensor einen Druck in einem Hydraulikzylinder, welcher einen Riemenvariator zum Antrieb eines Axialdresch- und/oder Trennrotors verstellt. Der Sensor kann aber auch beliebige andere Größen erfassen, wie das Antriebsmoment eines Schrägförderers oder einer Tangentialdreschtrommel oder die Schichtdicke im Schrägförderer und die Feuchtigkeit des Erntegutes.

Zweckmäßigerweise berücksichtigt die Steuerung die zeitliche Verzögerung zwischen der Erzeugung des zu erwartenden, vom Durchsatz abhängigen Werts und der Erfassung durch den Sensor. Dazu kann der Wert solange verzögert (abgespeichert) und erst dann einem Vergleicher zugeführt werden, wenn die vom Entfernungsmesser erfassten Pflanzen mit dem Sensor zusammenwirken.

Die Steuerung kann das Ergebnis des Vergleichs in einen Massendurchsatz umrechnen, der von einem anhand der Daten der besagten Anordnung berechneten Massendurchsatz subtrahiert wird.

Die Steuerung kann weiterhin ein Modell der Erntemaschine umfassen, das zur Bestimmung des vom zu erwartenden Durchsatz abhängigen Werts dient, der zusätzlich zur Vorgabe der Vortriebsgeschwindigkeit verwendet wird. Der vom zu erwartenden Durchsatz abhängige Wert wird modellbasiert prädiziert. Das Modell erhält das Ergebnis des Vergleichs zwischen dem Ausgangswert des Sensors und dem vom erwarteten Massendurchsatz abhängigen Wert als Eingangswert und wird dynamisch an die tatsächlichen Umstände angepasst. Mithilfe der tatsächlich gemessenen Werte wird die Schätzung und Prädiktion des Modells ständig verfeinert und angepasst.

Die erfindungsgemäße Anordnung kann an selbstfahrenden oder von einem Fahrzeug gezogenen oder daran angebauten Erntemaschinen Verwendung finden, beispielsweise Mähdreschern, Ballenpressen oder Feldhäckslern.

Ausführungsbeispiel

In den Zeichnungen ist ein nachfolgend näher beschriebenes Ausführungsbeispiel der Erfindung dargestellt. Es zeigt:

Fig. 1    eine halbschematische Seitenansicht eines landwirtschaftlichen Mähdreschers,

Fig. 2    ein Schema eines erfindungsgemäßen Durchsatzsteuerungssystems, und

Fig. 3    ein Schema der Steuerung der Figur 2.

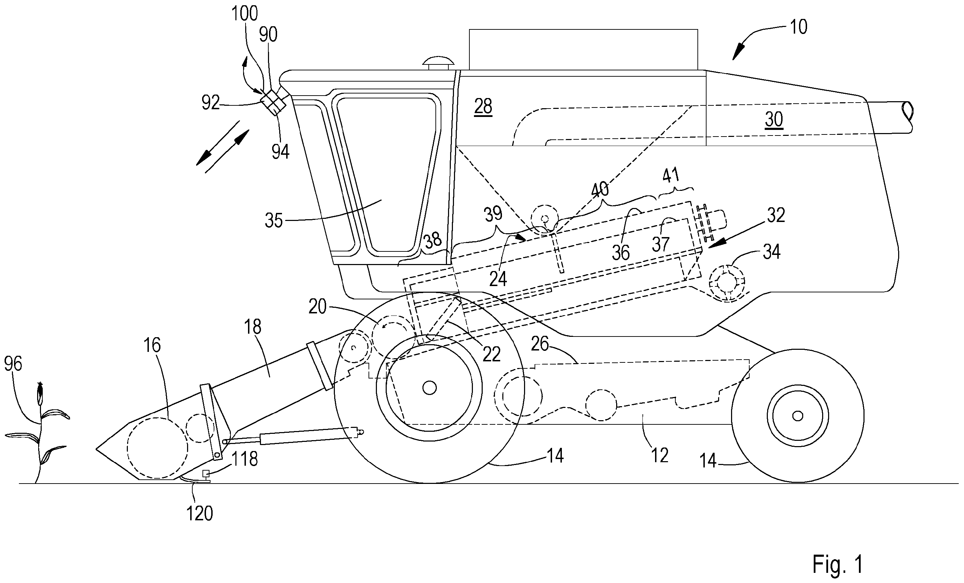

Die Figur 1 zeigt einen landwirtschaftlichen Mähdrescher 10 mit einer tragenden Struktur 12, die mit im Eingriff mit dem Erdboden stehenden Rädern 14 versehen ist. Obwohl der Mähdrescher 10 mit Rädern dargestellt ist, könnte er auch mit zwei oder vier Gleisketten versehen sein. Ein Schneidwerk 16 wird zum Ernten von Erntegut verwendet und führt es einem Schrägförderer 18 zu. Der Schrägförderer 18 enthält eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren, zum Dreschen und Trennen eingerichteten Gutbearbeitungseinrichtung 24 zu. Die dargestellte Gutbearbeitungseinrichtung 24 ist im Mähdrescher axial angeordnet, sie könnte aber auch in anderen Orientierungen relativ zur Längsachse des Mähdreschers 10 angeordnet sein. Obwohl die vorliegende Erfindung anhand einer Gutbearbeitungseinrichtung 24 mit einem Rotor beschrieben wird, könnte sie auch an einem Mähdrescher 10 mit einer konventionellen, quer angeordneten Dreschtrommel, die mit einem Dreschkorb zusammenwirkt, verwendet werden.

Die Gutbearbeitungseinrichtung 24 drischt und trennt das geerntete Gut. Das Korn und die Spreu fallen durch Roste am Boden der Gutbearbeitungseinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 einem Lastwagen oder Anhänger zugeführt werden.

Ausgedroschenes, vom Korn befreites Stroh wird von der Gutbearbeitungseinrichtung 24 durch einen Auslass 32 einer Auswurftrommel 34 zugeführt. Die Auswurftrommel 34 stößt das Stroh wiederum an der Rückseite des Mähdreschers 10 aus. Es ist anzumerken, dass die Auswurftrommel 34 das vom Korn befreite Gut auch direkt einem Strohhäcksler zuführen könnte. Der Betrieb des Mähdreschers 10 wird von einer Bedienerkabine 35 aus gesteuert.

Die Gutbearbeitungseinrichtung 24 umfasst ein zylindrisches Rotorgehäuse 36 und einen im Rotorgehäuse 36 angeordneten, drehbaren Rotor 37. Der vordere Teil des Rotors 37 und das Rotorgehäuse 36 definieren einen Beschickungsabschnitt 38. Stromab des Beschickungsabschnitts 38 sind ein Dreschabschnitt 39, ein Trennabschnitt 40 und ein Auslassabschnitt 41. Der Rotor 37 ist im Beschickungsabschnitt 38 mit einer konischen Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts 38 befindet sich der Dreschabschnitt 39. Im Dreschabschnitt 39 weist der Rotor 37 eine zylindrische Rotortrommel auf, die mit einer Anzahl von Dreschelementen versehen ist, um das vom Beschickungsabschnitt 38 erhaltene Gut zu dreschen. Stromab des Dreschabschnitts 39 befindet sich der Trennabschnitt 40, in dem das im gedroschenen Gut noch enthaltene Korn freigesetzt wird und durch ein bodenseitiges Rost im Rotorgehäuse 36 hindurch in das Reinigungssystem 28 fällt. Der Trennabschnitt 40 geht in den Auslassabschnitt 41 über, in dem das vom Korn befreite Gut (Stroh) aus der Gutbearbeitungseinrichtung 24 ausgestoßen wird.

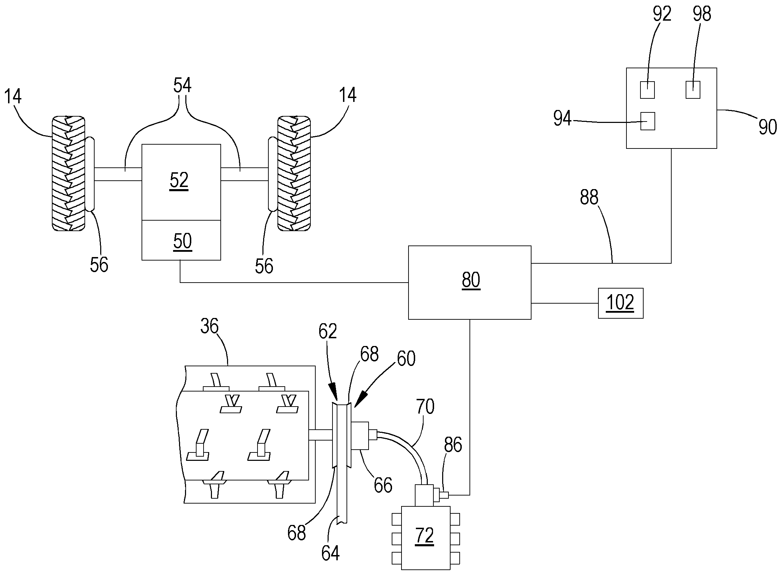

Die vorderen Räder 14 des Mähdreschers 10 werden durch ein hydrostatisches Getriebe 50 angetrieben, wie in der Figur 2 dargestellt. Das hydrostatische Getriebe 50 wird auf konventionelle Weise durch einen nicht gezeigten Verbrennungsmotor angetrieben. Das hydrostatische Getriebe 50 treibt wiederum ein Schaltgetriebe 52 an. Zwei treibende Wellen 54 erstrecken sich vom Schaltgetriebe 52 nach außen und treiben Endantriebe 56 der vorderen Räder 14 an. Das hydrostatische Getriebe 50 umfasst eine Pumpeneinheit und eine Motoreinheit. Die Pumpeneinheit und/oder die Motoreinheit sind mit einstellbaren Taumelplatten ausgestattet. Die einstellbaren Taumelplatten steuern die Ausgangsgeschwindigkeit des Getriebes 50 und dessen Drehrichtung. Elektromagnetisch gesteuerte Steuerventile steuern die Positionen der Taumelplatten. Die lenkbaren hinteren Räder 14 können auch durch Radmotore angetrieben werden, die direkt an den Rädern 14 befestigt sind. Die Geschwindigkeit der Radmotore kann durch das unten beschriebene Durchsatzsteuerungssystem gesteuert werden.

Ein verstellbarer Antrieb 60 mit variablem Drehmoment treibt den Rotor 37 an. Derselbe Verbrennungsmotor, der auch das hydrostatische Getriebe 50 antreibt, treibt auch den verstellbaren Antrieb 60 an. Der verstellbare Antrieb 60 ist ein Riementrieb, der eine nicht gezeigte antreibende Riemenscheibe mit variablem Durchmesser und eine angetriebene Riemenscheibe mit variablem Durchmesser umfasst. Ein Riemen 64 erstreckt sich zwischen der antreibenden Riemenscheibe und der angetriebenen Riemenscheibe 62, um Rotationsleistung zu übertragen. Hydraulikzylinder steuern die Durchmesser der Riemenscheiben. Der Hydraulikzylinder 66 ist mit der angetriebenen Riemenscheibe 62 gekoppelt und bewegt die Stirnplatten 68 der Riemenscheibe 62 nach innen bzw. außen, um den wirksamen Durchmesser der Riemenscheibe 62 gegenüber dem Riemen 64 zu steuern. Durch eine Änderung des wirksamen Durchmessers der Riemenscheiben wird die effektive Geschwindigkeit der angetriebenen Riemenscheibe 62 geändert. Durch eine Hydraulikleitung 70 wird dem Hydraulikzylinder 66 von einem Ventilzusammenbau 72 unter Druck stehende Hydraulikflüssigkeit zugeführt. Der Rotor 37 wird durch die Riemenscheiben variablen Durchmessers mit einer konstanten, ausgewählten Rotorgeschwindigkeit angetrieben. Das vom Riemen 64 und den Riemenscheiben übertragene Drehmoment variiert mit dem Massendurchsatz des Ernteguts.

Eine elektronische Steuerung 80 steuert die Vortriebsgeschwindigkeit v des Mähdreschers 10. Das bedeutet, dass die elektronische Steuerung 80 die Vorwärtsgeschwindigkeit (Erntegeschwindigkeit) des Mähdreschers 10 durch ein Einstellen der Position der Taumelplatten des hydrostatischen Getriebes 50 einstellt, indem der Betrieb der elektromagnetisch betätigten Steuerventile über eine Leitung 82 gesteuert wird. Die Steuerung 80 empfängt durch die Leitung 84 ein aktuelles Hydraulikdrucksignal von einem Hydraulikdrucksensor 86. Der Hydraulikdrucksensor 86 fühlt den Hydraulikdruck des Hydraulikzylinders 66, der den Antrieb 60 mit variablem Drehmoment verstellt. Es wurde herausgefunden, dass der Hydraulikdruck, mit dem der Hydraulikzylinder 66 den Antrieb 60 verstellt, mit dem Massendurchsatz in Beziehung steht.

Durch eine weitere Leitung 88 ist die Steuerung 80 mit einem berührungslos arbeitenden Entfernungsmesser 90 verbunden, der in diesem Ausführungsbeispiel als Anordnung zur vorausschauenden, berührungslosen Erfassung eines vor der Erntemaschine 10 stehenden Erntegutbestands 96 und zur Bereitstellung von Daten hinsichtlich eines zu erwartenden Massendurchsatzes in der Erntemaschine 10 dient und einen Sender 92 sowie einen Empfänger 94 umfasst und an der Oberseite der Kabine 35 befestigt ist. Der Sender 92 strahlt im Betrieb elektromagnetische Wellen im Radarfrequenzbereich schräg nach vorn auf den Erntegutbestand 96 auf dem Feld vor dem Mähdrescher 10 ab. Der Empfänger 94 empfängt vom Erntegutbestand 96 und ggf. vom Erdboden reflektierte Wellen. Eine Auswertungseinheit 98, die auch in die Steuerung 80 integriert werden könnte, evaluiert die Laufzeiten und Amplituden der vom Empfänger 94 empfangenen Wellen. Vorzugsweise ist die Polarisation der vom Sender 92 abgestrahlten Wellen vertikal und der Empfänger 94 empfängt getrennt voneinander horizontal und vertikal polarisierte Wellen. Eine geeignete Frequenz liegt bei 77 GHz. Der Entfernungsmesser 90 kann um eine etwa vertikale bzw. schräg nach oben und vorn geneigte Achse 100 hin und her schwingen, um den Erntegutbestand 96 über die Schnittbreite des Erntevorsatzes 16 in seitlicher Richtung abzutasten, oder sich eine geeigneten Anzahl an Sendern 92 und Empfängern 94 umfassen, die seitlich nebeneinander angeordnet sind, um gleichzeitig eine Anzahl an Laufzeiten und Amplituden über die Schnittbreite des Erntevorsatzes 16 zu gewinnen. Ein Geschwindigkeitssensor 102 führt der Steuerung 80 und der Auswertungseinheit 98 ein Geschwindigkeitssignal hinsichtlich der aktuellen Vortriebsgeschwindigkeit v des Mähdreschers 10 zu.

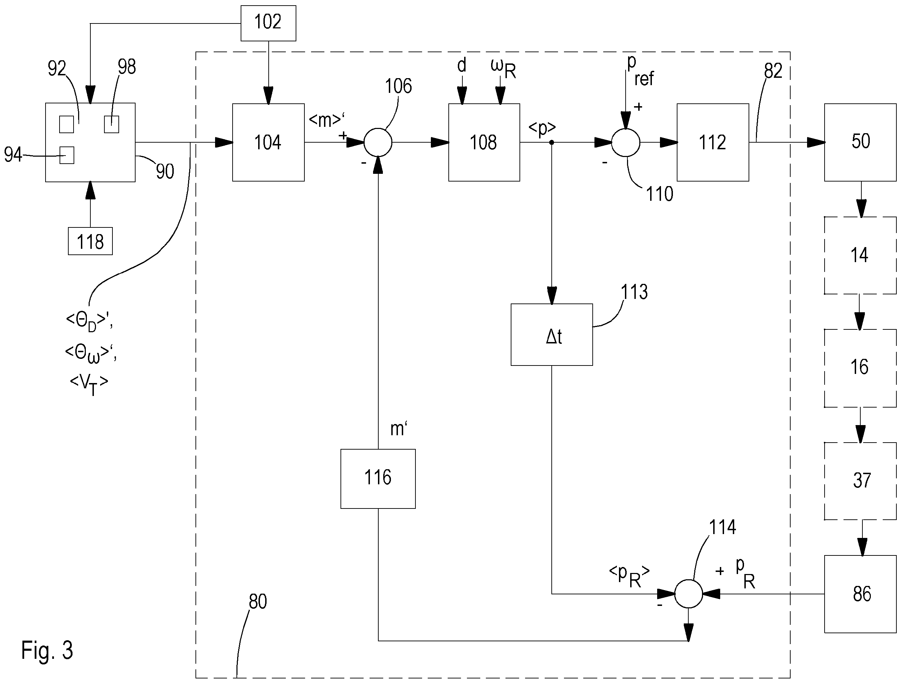

Die Figur 3 zeigt den Aufbau und die Funktionsweise der Steuerung 80 im Detail. Sie umfasst einen Massenstromberechner 104, der mit Signalen vom Entfernungsmesser 90 und vom Geschwindigkeitssensor 102 beaufschlagt wird. Der Massenstromberechner 104 bestimmt einen zu erwartenden Massendurchsatz <m>', d.h. die je Zeiteinheit vom Schrägförderer 18 in den Mähdrescher 10 geförderte Masse des Ernteguts. Im Folgenden deuten spitze Klammern <> auf einen zu erwartenden, geschätzten oder errechneten Wert hin und der Hochstrich' auf eine Zeitableitung. Dieser erwartete Massendurchsatz wird einem ersten Vergleicher 106 zugeführt, der ihn mit einem gemessenen Massendurchsatz von einem Massendurchsatzbestimmer 116 vergleicht, der weiter unten beschrieben wird.

Die vom Vergleicher 106 ermittelte Differenz wird einem Mähdreschermodell 108 zugeführt, das anhand der Differenz einen zu erwartenden Druck <p> evaluiert, der einem zweiten Vergleicher 110 zugeführt wird. Dieser zu erwartende Druck <p> entspricht einem Druck des Hydraulikdrucksensors 86, den der noch nicht geerntete, vor dem Mähdrescher 10 stehende und gerade durch den Entfernungsmesser 90 untersuchte Erntegutbestand 96 verursachen wird. Der zweite Vergleicher 110 vergleicht diesen zu erwartenden Druck <p> mit einem Referenzdruck $p_{ref}$, und die Differenz wird einer Ansteuerschaltung 112 zugeführt, welche ihrerseits das Übersetzungsverhältnis des hydrostatischen Getriebes 50 kontrolliert.

Eine Regelstrecke wird durch die vorderen Räder 14, welche den Mähdrescher 10 mit einer durch das hydrostatische Getriebe 50 vorgegebenen Geschwindigkeit v über das Feld bewegen, den Erntevorsatz 16, der die Pflanzen des Erntegutbestandes 96 aufnimmt, und den Rotor 37 gebildet, der die Pflanzen drischt und trennt und dessen vom Massendurchsatz abhängiges Antriebsmoment durch den Hydraulikdrucksensor 86 erfasst wird. Der Hydraulikdrucksensor 86 erfasst demnach einen Druck $p_R$, der durch einen dritten Vergleicher 114 mit einem zu erwartenden Druck <$p_R$> verglichen wird, der mittels eines Zeitverzögerers 113 aus dem Ausgangssignal <p> des Mähdreschermodells 108 gebildet wird. Das Ergebnis des dritten Vergleichers 114 wird dem Massendurchsatzbestimmer 116 zugeführt, der den Unterschied zwischen dem gemessenen Druck $p_R$, am Hydraulikdrucksensor 86 und dem zu erwartenden Druck <$p_R$> am Ausgang des Zeitverzögerers 113 in einen Massenfehler m' umrechnet.

Die Arbeitsweise der Steuerung 80 ist nach alledem folgendermaßen. Der die Auswertungseinheit 98 des Entfernungsmessers 90 leitet kontinuierlich anhand der vom Empfänger 94 empfangener, vertikal und horizontal polarisierter Wellen einerseits die Höhe $h_O$ der Oberkante des Pflanzenbestandes 96 auf dem Feld ab (vgl. hierzu den Stand der Technik nach DE 10 2011 017 621 A1). Anhand einer Schnitthöhe $h_u$ des Erntevorsatzes 16 über dem Boden, die mittels eines den Winkel eines auf dem Boden entlanglaufenden Tastbügels 120 erfassenden Sensors 118 (oder eines nicht gezeigten Sensors zur Erfassung der Position der Zylinder zur Höhenverstellung des Schneidwerks 16), wird über die Breite des Erntevorsatzes die Höhe des aufzunehmenden Pflanzenbestandes evaluiert, indem die jeweilige Schnitthöhe $h_u$ von der Höhe $h_O$ der Oberkante des Pflanzenbestandes 96 abgezogen wird. Es sind auch andere Vorgehensweisen zur Ermittlung der Schnitthöhe denkbar; so kann sie aus den Signalen des Entfernungsmessers 90 abgeleitet werden (vgl. DE 10 2011 017 621 A1), dessen Signale auch zur Schneidwerkshöhensteuerung verwendet werden können. Die Messwerte für die Schnitthöhe $h_u$ und/oder die Höhe $h_O$ der Oberkante des Pflanzenbestandes 96 können anhand eines Trägheitssensors (nicht gezeigt) zur Erfassung der Orientierung der Erntemaschine 10 in Raum korrigiert werden.

Die Höhe des aufzunehmenden Pflanzenbestands wird über die Arbeitsbreite des Erntevorsatzes 16 integriert und mit der Vortriebsgeschwindigkeit v multipliziert, um die erwartete Volumenrate <$V_T$>' zu bestimmen, welche über die Zeit integriert wird, um das aufgenommene Volumen <$V_T$> zu berechnen. Andererseits werden aus den Signalen des Empfängers 94 die Zeitableitung <$\Theta_D$>' des Raumfüllungsgrades des Trockenmassegehalts des Pflanzenbestandes (den man auch als volumetrischen Feststoffanteil bezeichnen kann) und die Zeitableitung <$\Theta_W$>' des Raumfüllungsgrades des Wassergehalts des Pflanzenbestandes (den man auch als volumetrischen Wassergehalt bezeichnen kann) errechnet, was anhand der horizontalen und vertikalen Komponenten der empfangenen, vom Pflanzenbestand 96 reflektierten Wellen erfolgt. Wie oben ausgeführt, handelt es sich bei dem Raumfüllungsgrad $\theta$ um den Anteil an Pflanzen im vom Pflanzenbestand 96 ausgefüllten Volumen.

Die erwähnten Größen <$\Theta_D$>', <$\Theta_W$>' und <$V_T$> sowie optional <$V_T$>' werden kontinuierlich erfasst und dem Massenstromberechner 104 zugeführt. Dieser berechnet kontinuierlich einen bestandsdichtenabhängig variierenden Massendurchsatz <m>' nach folgender Formel:

$$<m>' = (\rho_D * <\Theta_D>' + \rho_W * <\Theta_W>') * <V_T>. \qquad (1)$$

Dabei sind $\rho_D$ die Dichte der Trockenmasse und $\rho_W$ die Dichte des Wassers. Beide sind bekannt und können als konstant angesehen werden. Alle anderen Größen sind ebenfalls bekannt, sodass der Massenstromberechner 104 in der Lage ist, den bestandsdichtenabhängigen Massendurchsatz <m>' zu berechnen. Neben der in (1) berücksichtigten, möglichen Änderung der Bestandsdichte und -höhe in Vorwärtsrichtung gibt es noch eine zweite Einflussgröße auf den Massendurchsatz, nämlich die absoluten Werte für den Raumfüllungsgrad <$\Theta_D$> des Trockenmassegehalts des Pflanzenbestandes und für den Raumfüllungsgrad <$\Theta_W$> des Wassergehalts des Pflanzenbestandes, die aber nicht vom Massenstromberechner 104, sondern (indirekt) vom Mähdreschermodell 108 (mit den Vergleichern 114 und 106) berücksichtigt wird, da der Entfernungsmesser 90 in der Regel diese absoluten Raumfüllungsgrade nicht zuverlässig erfassen kann.

Das Mähdreschermodell 108 erhält als weitere Eingangsgrößen noch die Größe des Dreschspalts d und die Drehzahl $\omega_R$ des Rotors 37 und optional weitere Betriebsparameter der Erntemaschine 10. Anhand des Massendurchsatzes vom Vergleicher 106 und anhand der weiteren Eingangsgrößen bestimmt das Mähdreschermodell 108 unter Verwendung eines mathematischen/physikalischen Modells kontinuierlich den aufgrund des zu erntenden Ernteguts zu erwartenden Wert <p> für den Druck im Hydraulikdrucksensor 86. Die Vortriebsgeschwindigkeit v wird über den Vergleicher 110, die Ansteuerschaltung 112 und das hydrostatische Getriebe 50 kontinuierlich derart eingestellt, dass schließlich ein gewünschter Solldruck $p_{ref}$ erreicht wird. Dieser Solldruck $p_{ref}$ kann fest vorgegeben oder durch den Bediener eingebbar sein, insbesondere nach Kalibrierung mit einer Verlustprüfschale.

Der Vergleicher 114 vergleicht den tatsächlichen Druck $p_R$ im Hydraulikzylinder 66, der mit dem Hydraulikdrucksensor 86 erfasst wird, kontinuierlich mit einem zu erwartenden Druck $<p_R>$, der aufgrund der Laufzeit des Ernteguts zwischen der Erfassung durch den Entfernungsmesser 90 und dem Zusammenwirken mit dem Rotor 37 durch den Zeitverzögerer 113 zwischengespeichert und um diese Laufzeit verzögert an den Vergleicher 114 geliefert wird. Eventuelle Unterschiede werden durch den Massendurchsatzbestimmer 116 kontinuierlich in Massendurchsatzwerte m' umgerechnet, die durch den ersten Vergleicher 106 kontinuierlich vom Massendurchsatz <m>' subtrahiert werden. Der Massendurchsatzbestimmer 116 dient als Rückführung der tatsächlichen Druckwerte an das Mähdreschermodell 108 und kann als Rückführungsfaktor oder-matrix ausgeführt sein. Falls somit Abweichungen zwischen dem vom Mähdreschermodell 108 zu erwartenden Druck $<p_R>$ und dem tatsächlichen Druck $p_R$ auftreten, was beispielsweise auf Modellfehler, Prädiktionsfehler und die Messungenauigkeit, die aufgrund der nur relativen Messung des radarbasierten Entfernungsmessers 90 entsteht, zurückzuführen sein kann, wird die Eingangsgröße des Mähdreschermodells 108 kontinuierlich entsprechend - und ohne nennenswerte zeitliche Verzögerung - angepasst, um diese Abweichungen wieder auszugleichen. Im stationären Zustand, d.h. bei konstant dichtem Erntegut, werden die vom Mähdreschermodell prädizierten Werte <p> gegen die tatsächlich gemessenen Werte $p_R$ konvergieren, was durch die beschriebene Vorgehensweise (mathematisch) sichergestellt ist. Die Wirkungsweise der Steuerung 80 lässt sich demnach derart zusammenfassen, dass der Entfernungsmesser 90 vorausschauend Änderungen des Massendurchsatzes erfasst. Das Mähdreschermodell 108 berechnet einen vom zu erwartenden Massendurchsatz abhängigen Wert (hier den Druck im Hydraulikdrucksensor 86), der (im Zusammenwirken mit dem zweiten Vergleicher 110, der Ansteuerschaltung 112 und den Taumelplatten des hydrostatischen Getriebes 50) verwendet wird, um die Vortriebsgeschwindigkeit v des Mähdreschers 10 im Sinne einer Einhaltung eines gewünschten Wertes des Massendurchsatzes zu kontrollieren und verwendet dafür die Daten des Entfernungsmessers 90. Eine unter regeltechnischer Betrachtung als Beobachter anzusehende Rückkopplungsschaltung zur Erfassung des tatsächlichen Massendurchsatzes (mit dem Hydraulikdrucksensor 86, dem Zeitverzögerer 113, dem Vergleicher 114 und dem Massendurchsatzbestimmer 116) erfasst eine vom tatsächlichen Massendurchsatz abhängige Größe (ebenfalls den Druck $p_R$ im Hydraulikdrucksensor 86) und eine eventuelle Abweichung zwischen dem erwarteten und gemessenen Massendurchsatz (bzw. die jeweils damit im Zusammenhang stehenden Druckwerte $<p_R>$ und $p_R$) und führt diese wieder dem Mähdreschermodell 108 eingangsseitig als Korrekturgröße zu, um den Zustand des Mähdreschermodells 108 entsprechend anzupassen.

Der Massenstromberechner 104 und das Mähdreschermodell 108 realisieren softwaretechnisch realisierte, physikalische oder mathematische Mehrgrößen-Modelle und können linear oder nichtlinear, dynamisch oder statisch, zeitvariant oder zeitinvariant, automatenbasiert oder auf neuralen Netzen oder kennlinien- oder kennfeldbasiert realisiert werden.

Die vorliegende Erfindung eignet sich nicht nur für stehende Pflanzen 96, wie zuvor beschrieben, sondern auch für in einem Schwad oder flächig liegende Pflanzen.

Es sind noch weitere Verfeinerungen der Erntemaschine 10 denkbar. So kann der durch das Mähdreschermodell 108 generierte, zu erwartende Druck <p> auch zur selbsttätigen Einstellung von Arbeitsparametern des Dresch- und Trennrotors 37 (Drehzahl, Dreschspalt) und/oder des Reinigungssystems 26 (Gebläsedrehzahl, Sieböffnungen) verwendet werden, denn er enthält Informationen hinsichtlich des Massendurchsatzes, basierend auf denen die erwähnten Arbeitsparameter optimiert werden können.

Als weitere Eingangsgrößen des Mähdreschermodells 108 zur Bestimmung des zu erwartenden Drucks <p> können noch Ernteguteigenschaften, wie Feuchtigkeit des Strohs und/oder der Ähren oder mechanische Eigenschaften des Ernteguts oder der Bruchkornanteil im Korntank 28 oder mittels eines Verlustsensors (nicht gezeigt) erfasste Verluste am Auslass des Rotors 37 und/oder des Reinigungssystems 26 und/oder der Massendurchsatz und/oder Kornanteil in einem Überkehrförderer dienen.

**Patentansprüche**

1. Erntemaschine (10), umfassend:

   Vortriebsmittel (14) zum Bewegen der Erntemaschine (10) mit einer Geschwindigkeit (v) über ein Feld;
   eine Anordnung zur vorausschauenden, berührungslosen Erfassung eines vor der Erntemaschine (10) stehenden Erntegutbestands (96) und zur Bereitstellung von Daten hinsichtlich eines zu erwartenden Massendurchsatzes in der Erntemaschine (10);
   eine Steuerung (80), welche konfiguriert ist, die Vortriebsgeschwindigkeit (v) der Erntemaschine (10) selbsttätig unter Berücksichtigung eines unter Verwendung der Daten der Anordnung zur vorausschauenden, berührungslosen Erfassung des vor der Erntemaschine (10) stehenden Erntegutbestands (96) berechneten, zu erwartenden Massendurchsatzes im Sinne einer Einhaltung eines gewünschten Wertes des Massendurchsatzes zu kontrollieren;

und einen Sensor (86) zu Erfassung einer vom tatsächlichen Massendurchsatz der Erntemaschine (10) abhängigen Größe;

**dadurch gekennzeichnet, dass** die Steuerung (80) konfiguriert ist, den Ausgangswert des Sensors (86) mit einem von einem zu erwartenden Massendurchsatz abhängigen Wert zu vergleichen und das Ergebnis des Vergleichs als Rückkopplungswert zur Festlegung der Vortriebsgeschwindigkeit (v) zu verwenden.

2. Erntemaschine (10) nach Anspruch 1, wobei die Anordnung zur vorausschauenden, berührungslosen Erfassung des vor der Erntemaschine (10) stehenden Erntegutbestands (96) einen Entfernungsmesser (90) mit einem Sender (92) zum sukzessiven Beaufschlagen eines vor der Erntemaschine (10) stehenden Erntegutbestands (96) mit elektromagnetischen Wellen, einem Empfänger (94) zum Empfangen vom Erntegutbestand (96) reflektierter Wellen sowie einer Auswertungseinheit (98) zum Berechnen von Daten hinsichtlich des zu erwartenden Massendurchsatzes in der Erntemaschine (10) anhand der Laufzeiten und/oder Amplituden der empfangenen Wellen umfasst.

3. Erntemaschine (10) nach Anspruch 2, wobei die elektromagnetischen Wellen vom Sender (92) abgestrahlte, horizontal und/oder vertikal polarisierte Radarwellen sind und der Empfänger (94) vom Pflanzenbestand (96) reflektierte, vertikal polarisierte Radarwellen und/oder horizontal polarisierte Radarwellen empfängt, wobei Radarwellen einer einzigen Frequenz oder unterschiedlicher Frequenzen Verwendung finden und die Auswertungseinheit (98) konfiguriert ist, anhand der empfangenen Radarwellen die zeitliche Ableitung des Raumfüllungsgrads des Pflanzenbestands (96) mit Trockenmasse und Wasser sowie das aufgenommene Volumen $<V_T>$ zu berechnen.

4. Erntemaschine (10) nach einem der Ansprüche 1 bis 3, wobei der Sensor (86) einen Druck in einem Hydraulikzylinder (66) erfasst, welcher einen Riemenvariator zum Antrieb eines Axialdresch- und Trennrotors (37) verstellt.

5. Erntemaschine (10) nach einem der Ansprüche 1 bis 4, wobei die Steuerung (80) konfiguriert ist, die zeitliche Verzögerung zwischen der Erzeugung des vom zu erwartenden Massendurchsatz abhängigen Werts und der Erfassung durch den Sensor (86) zu berücksichtigen.

6. Erntemaschine (10) nach einem der vorhergehenden Ansprüche, wobei die Steuerung (80) konfiguriert ist, das Ergebnis des Vergleichs in einen Massendurchsatz umzurechnen, der von einem anhand der Daten der Anordnung zur vorausschauenden, berührungslosen Erfassung eines vor der Erntemaschine (10) stehenden Erntegutbestands (96) berechneten Massendurchsatz subtrahiert wird.

7. Erntemaschine (10) nach einem der vorhergehenden Ansprüche, wobei die Steuerung (80) ein Modell (108) der Erntemaschine (10) umfasst, das zur Bestimmung des vom zu erwartenden Massendurchsatz abhängigen Werts dient, welcher auch zur Vorgabe der Vortriebsgeschwindigkeit (v) verwendet wird.

8. Erntemaschine (10) nach Anspruch 7, wobei die Steuerung (80) konfiguriert ist, den vom zu erwartenden Massendurchsatz abhängigen Wert zeitverzögert mit dem Wert des Sensors (86) zu vergleichen.

**Claims**

1. Harvesting machine (10) comprising:

propulsion means (14) for moving the harvesting machine (10) at a speed (v) over a field;
an arrangement for predictive contactless detection of a stock (96) of harvested crop located in front of the harvesting machine (10) and for making available data relating to an expected mass throughput rate in the harvesting machine (10);
a controller (80) which is configured to control the propulsion speed (v) of the harvesting machine (10) automatically taking into account an expected mass throughput rate, calculated using the data of the arrangement for predictive contactless detection of the stock (96) of harvested crop located in front of the harvesting machine (10), with the aim of maintaining a desired value of the mass throughput rate;
and a sensor (86) for detecting a variable which is dependent on the actual mass throughput rate of the harvesting machine (10);
**characterized in that** the controller (80) is configured to compare the output value of the sensor (86) with a value dependent on an expected mass throughput rate and to use the result of the comparison as a feedback value for defining the propulsion speed (v).

**2.** Harvesting machine (10) according to Claim 1, wherein the arrangement for the predictive contactless detection of the stock (96) of harvested crop located in front of the harvesting machine (10) comprises a distance sensor (90) with a transmitter (92) for successively applying electromagnetic waves to a stock (96) of harvested crop located in front of the harvesting machine (10), a receiver (94) for receiving waves reflected from the stock (96) of harvested crop, and an evaluation unit (98) for calculating data relating to the expected mass throughput rate in the harvesting machine (10) on the basis of transit times and/or amplitudes of the received waves.

**3.** Harvesting machine (10) according to Claim 2, wherein the electromagnetic waves of the transmitter (92) are irradiated horizontally and/or vertically polarised radar waves, and the receiver (94) receives vertically polarised radar waves and/or horizontally polarised radar waves which are reflected by the plant stock (96), wherein radar waves of a single frequency or of different frequencies are used and the evaluation unit (98) is configured to calculate on the basis of the received radar waves the time derivation of the spatial filling ratio of the plant stock (96) with dry material and water as well as the accommodated volume $<V_T>$.

**4.** Harvesting machine (10) according to one of Claims 1 to 3, wherein the sensor (86) detects a pressure in a hydraulic cylinder (66) which adjusts a belt variator for driving an axle threshing and separating rotor (37).

**5.** Harvesting machine (10) according to one of Claims 1 to 4, wherein the controller (80) is configured to take into account the delay between the generation of the value dependent on the expected mass throughput rate and the detection by the sensor (86).

**6.** Harvesting machine (10) according to one of the preceding claims, wherein the controller (80) is configured to convert the result of the comparison into a mass throughput rate which is subtracted from a mass throughput rate calculated on the basis of the data of the arrangement for the predictive contactless detection of a stock (96) of harvested crop located in front of the harvesting machine (10).

**7.** Harvesting machine (10) according to one of the preceding claims, wherein the controller (80) comprises a model (108) of the harvesting machine (10), which model (108) is used to determine the value dependent on the expected mass throughput rate, which value is also employed to predefine the propulsion speed (v).

**8.** Harvesting machine (10) according to Claim 7, wherein the controller (80) is configured to compare the value dependent on the expected mass throughput rate with the value of the sensor (86) after a delay.

**Revendications**

**1.** Moissonneuse (10), comprenant :

des moyens de propulsion (14) destinés à déplacer la moissonneuse (10) à une vitesse (v) sur un champ ;
un système destiné à détecter sans contact et de manière anticipée une récolte (96) se trouvant devant la moissonneuse (10) et à fournir des données concernant un débit massique à attendre dans la moissonneuse (10) ;
une unité de commande (80), qui est configurée pour commander automatiquement la vitesse de propulsion (v) de la moissonneuse (10) en tenant compte d'un débit massique à attendre en utilisant les données du dispositif destiné à détecter sans contact et de manière anticipée le débit massique à attendre calculé de la récolte (96) se trouvant devant la moissonneuse (10) au sens du respect d'une valeur souhaitée du débit massique ;
et un capteur (86) destiné à détecter une grandeur dépendant du débit massique effectif de la moissonneuse (10) ;
**caractérisé en ce que** l'unité de commande (80) est configurée pour comparer la valeur de sortie du capteur (86) à une valeur dépendant du débit massique à attendre et pour utiliser le résultat de la comparaison en tant que valeur de rétroaction permettant d'établir la vitesse de propulsion (v).

**2.** Moissonneuse (10) selon la revendication 1, dans laquelle le dispositif destiné à détecter sans contact et de manière anticipée la récolte (96) se trouvant devant la moissonneuse (10) comprend un dispositif de mesure de distance (90) comportant un émetteur (92) destiné à exposer une récolte (96) se trouvant devant la moissonneuse (10) à des ondes électromagnétiques, un récepteur (94) destiné à recevoir de la récolte (96) des ondes réfléchies, ainsi qu'une unité d'analyse (98) destinée à analyser des données concernant le débit massique à attendre dans la moissonneuse (10) sur la base des temps de propagation et/ou des amplitudes des ondes reçues.

3. Moissonneuse (10) selon la revendication 2, dans laquelle les ondes électromagnétiques sont des ondes radar rayonnées par l'émetteur (92) polarisées horizontalement et/ou verticalement et le récepteur (94) reçoit des ondes radar polarisées verticalement et/ou des ondes radar polarisées horizontalement réfléchies par la récolte (96), dans lequel on utilise des ondes radar à une fréquence unique ou à des fréquences différentes et l'unité d'analyse (98) est configurée pour calculer, sur la base des ondes radar reçues, la dérivée temporelle du degré de remplissage spatial de la récolte (96) en masse sèche et en eau ainsi que le volume reçu $<V_T>$.

4. Moissonneuse (10) selon l'une quelconque des revendications 1 à 3, dans laquelle le capteur (86) détecte une pression dans un cylindre hydraulique (66) qui déplace un variateur à courroie destiné à entraîner un moteur de battage axial et de séparation (37).

5. Moissonneuse (10) selon l'une quelconque des revendications 1 à 4, dans laquelle l'unité de commande (80) est configurée pour tenir compte du retard temporel entre la génération de la valeur dépendant du débit massique à attendre et la détection effectuée par le capteur (86).

6. Moissonneuse (10) selon l'une quelconque des revendications précédentes, dans laquelle l'unité de commande (80) est configurée pour convertir le résultat de la comparaison en un débit massique qui est soustrait à un débit massique calculé sur la base des données du dispositif destiné à détecter sans contact et de manière anticipée une récolte (96) se trouvant devant la moissonneuse (10).

7. Moissonneuse (10) selon l'une quelconque des revendications précédentes, dans laquelle l'unité de commande (80) comprend un modèle (108) de la moissonneuse (10) qui sert à déterminer la valeur dépendant du débit massique à attendre, laquelle valeur est également utilisée pour spécifier la vitesse de propulsion (v).

8. Moissonneuse (10) selon la revendication 7, dans laquelle l'unité de commande (80) est configurée pour comparer de manière retardée dans le temps la valeur dépendant du débit massique à attendre à la valeur du capteur (86).

Fig. 1

Fig. 3

EP 2 803 256 B1

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1243173 A1
- DE 102011017621 A1
- DE 10130665 A1
- DE 102011085380 A1